# EUROPEAN PATENT APPLICATION

(11) **EP 1 326 320 A2**
(43) Date of publication of application: **09.07.2003**
(21) Application number: 02257388.5
(22) Date of filing: 24.10.2002
(51) Int. Cl.: H02K 5/128

(54) **Composite canning arrangement for motors**

(30) Priority: 08.01.2002 US 40833
(71) Applicant: Electric Boat Corporation, Groton, CT 06340-4989 (US)
(72) Inventor: Franco, Alberto, Niantic, Connecticut 06357 (US); Pappas, Spyro, Fort Lee, New Jersey 07024 (US); Van Dine, Pieter, Mystic, Connecticut 06355 (US); Gheorghiu, Michael, Forest Hills, New York 11375 (US)
(74) Representative: Lucas, Brian Ronald

(57) **Abstract**

In the embodiments described in the specification, an electric motor has a stator with an inner cylindrical composite can member affixed to the stator housing by screws and the rotor has an outer cylindrical can member affixed to the rotor by screws, each of the composite can members being sealed to the component to which it is affixed by O-rings. In one embodiment ridges are formed in the surface of one of the composite can members facing the space between the stator and the rotor to control the flow of liquid through the space.

## Description

### BACKGROUND OF THE INVENTION

This invention relates to electric motors having stators and rotors which are provided with canning arrangements to protect them from intrusion of water when submerged.

Many conventional canning arrangements for electric motor rotors and stators include a metal enclosure made, for example, by welding sheet metal parts with a thickness of about 0.025 inches or more to provide a water-tight seal for the rotor or stator. Such conductive material, however, introduces eddy current losses which reduce the motor efficiency and, in some cases, increase the size of the motor. If surface irregu larities such as grooves or projections are formed on the surfaces of the can to promote the flow of cooling water through the gap between the stator and the rotor, irregularities in flux linkage are introduced and eddy current losses are increased significantly. In some cases, the metallic can is eliminated by encapsulating the rotor and stator in a layer of composite material. Because the composite material is not rigid and is subject to damage, however, this introduces dimensional control difficulties and interferes with maintenance of the component.

The Blakeley et al. Patent No. 5,122,704 discloses a composite rotor sleeve for a rotor composed of a continuous film of polyimide material on its radially inner surface surrounding the rotor and successive layers of plies formed from wound fibrous material, such as carbon fibers impregnated in a matrix of resin in which the carbon fibers extends circumferentially around the rotor in the inner plies and extend at angles to the diameter of the rotor in outer layers to provide strength. The assembly of composite layers prevents leakage of liquid between the rotor and the space between the rotor and stator.

The Smith et al. Patent No. 6,069,421 discloses an electric motor in which the stator and the rotor are encapsulated in composite resin material with inner and outer composite layers made from high strength resin containing high modulus fibers, such as fiberglass, graphite, carbon, boron, quartz or arimid fiber material.

According to the Fukushi et al. Patent No. 4,492,889 a stator for a submerged motor is encapsulated in a carbon fiber-reinforced plastic housing having components including end caps which are threaded to cylindrical members to provide a mechanical connection between them.

The Yamamoto et al. Patent No. 4,496,866 discloses a submersible electric motor having a stator formed from an inner thin metal cylinder surrounded by a stator core and coil and a molded resin member formed to surround the outer wall having two end faces adhesively joined to the inner cylinder.

The Nakamura et al. Patent No. 5,490,319 also discloses an electric motor with an encapsulated stator having a core and coils embedded in plastic resin with resin molded cans that isolate the encapsulating resin from the rotor section.

The Ineson Patent No. 5,334,897 describes a sealed electric motor having interfitting metallic housing members and an overmolded plastic casing, and the Bresolin Patent No. 5,767, 606 describes a method for manufacturing a sealed synchronous electric motor, particularly for submersible pumps by which the entire stator of the motor is embedded into a matrix of insulating resin.

The Veronesi et al. Patents Nos. 5,185,545 and 5,252,785 disclose canned rotors for electric motors in which the outer surface of the rotor has a spiral groove to help circulate water through the gap between the rotor and the stator.

The patent to Madsen No. 3,366,813 discloses a sleeve covering a rotor made of successive layers of wound glass fibers impregnated with epoxy resin and having end regions which are shaped to be received in end flanges and are held captive by steel rings shrunk onto the layers to enclose the flanges.

### SUMMARY OF THE INVENTION

Accordingly, it is an object of the present invention to provide a composite canning arrangement for electric motor components which overcomes disadvantages of the prior art.

Another object to the invention is to provide a composite canning arrangement for electric motor components which permits disassembly for motor maintenance.

A further object to the invention is to provide a canning arrangement having a contoured surface to promote or inhibit water flow through the gap between the stator and rotor without introducing eddy current losses.

These and other objects to the invention are attained by providing a composite canning arrangement for rotors or stators in which a pre-shaped composite component is affixed by mechanical connectors such as screws or the like to a support member and sealed to the support member with O-rings, gaskets or the like. The pre-shaped composite component may have a surface which is contoured to promote or inhibit water flow in the gap between the stator and rotor during operation.

### BRIEF DESCRIPTION OF THE DRAWINGS

Further objects and advantages of the invention will be apparent from a reading of the following description in conjunction with the accompanying drawings in which:
Fig. 1 is a schematic end view illustrating a representative embodiment of an electric motor having a rotor and a stator with a composite canning arrangement in accordance with the invention;
Fig. 2 is a schematic end view of the rotor illustrated in Fig. 1;
Fig. 3A is a cross-sectional view taken along the lines IIIA-III-A of Fig. 2;
Fig. 3B is a cross-sectional view taken along the lines IIIB-IIIB of Fig. 2;
Fig. 4 is an end view of the stator illustrated in Fig. 1;
Fig. 5 is a cross-sectional view taken along the lines V-V of Fig. 4 and looking in the direction of the arrows;
Fig. 6A is a fragmentary plan view showing the surface of a rotor formed with a corrugation pattern arranged to inhibit flow of water through the gap between the rotor and the stator;
Fig. 6B is a cross-sectional view of the arrangement shown in Fig. 6A;
Fig. 7A is a fragmentary plan view of the surface of a rotor having a corrugation pattern arranged to promote the flow of water through the gap between the rotor and the stator; and
Fig. 7B is a cross-sectional view of the arrangement shown in Fig. 7A.

### DESCRIPTION OF PREFERRED EMBODIMENTS

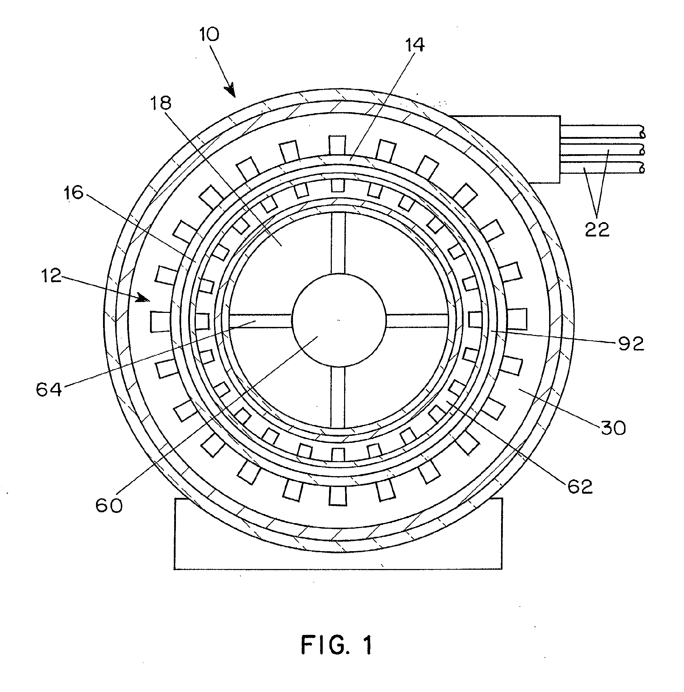

In a typical embodiment of the invention shown in the drawings, an electric motor 10 illustrated in Fig. 1 includes a stator 12 provided with a composite canning arrangement 14 so as to be capable of being submerged in a liquid such as water. The stator has a central opening 16 in which a rotor 18, also provided with a composite canning arrangement 20, is supported for rotation.

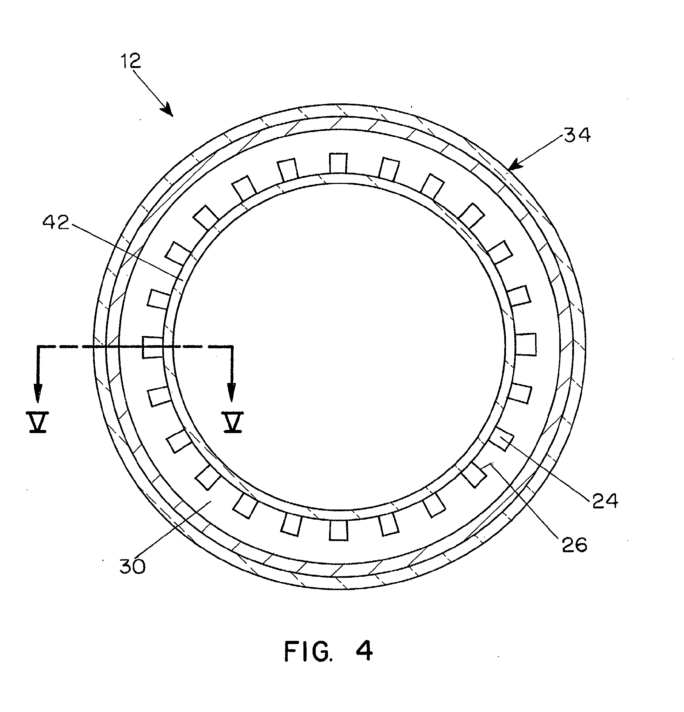

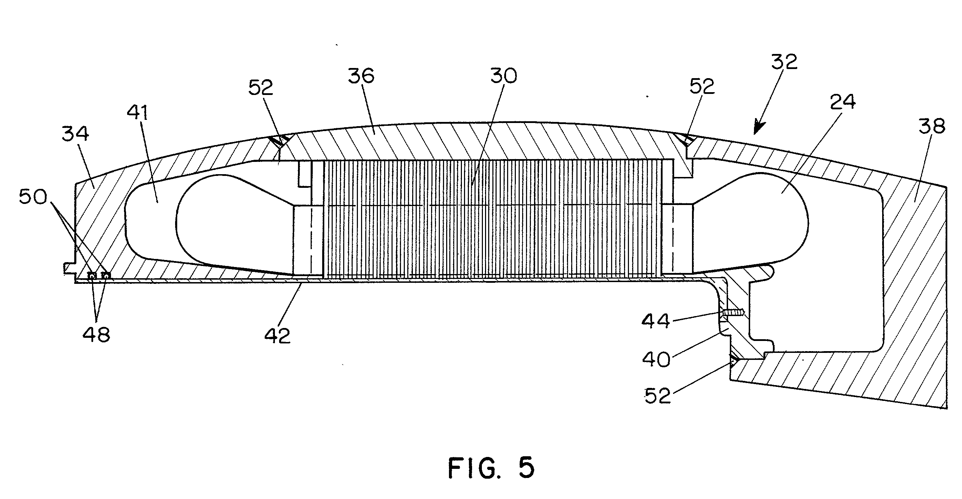

The stator 12 is supplied with power through cables 22 for energizing stator windings 24, schematically illustrated in Fig. 5, which are received in aligned slots 26, shown in Fig. 4, formed in an assembly of ring-shaped laminations 30 made of magnetic material. As best seen in Fig. 5, the laminations 30 and windings 24 are housed in a support assembly 32 consisting of mechanically connected components 34, 36, 38 and 40 forming an enclosure 41 which is sealed by the composite canning arrangement 14.

In the representative composite canning arrangement 14 shown in Fig. 5 a cylindrical composite can member 42 is mechanically affixed to the inner surface of the support assembly 32 by attaching devices such as screws 44 which are located outside the path of the magnetic flux extending between the rotor 18 and the stator 12. The cylindrical composite can member 42 is a rigid component pre-formed from a fiber-reinforced organic or inorganic polymer composite, the fibers being chosen, for example, from glass, aramid, carbon, polyester and quartz material. Preferably, the composite can member 42 is made using a dry lay-up resin transfer molding or a wet or pre-impregnated filament winding technique to provide sufficient rigidity to the can member 42 to maintain its cylindrical shape accurately under all environmental conditions and resist damage or deformation from contact with other component.

In order to seal the joint between the can member 42 and the housing, a series of O-rings 48 are mounted in grooves 50 in the support assembly 32 and the support assembly members 34, 36, 38 and 40 are provided with seals 52 at the joints between them. In this way the housing formed by the support assembly members provides a water-tight seal while at the same time permitting convenient disassembly for repair and maintenance purposes.

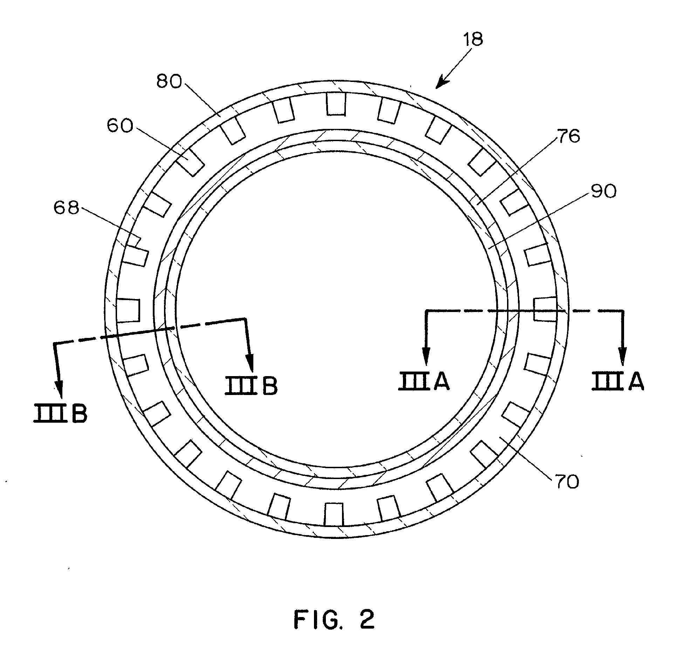

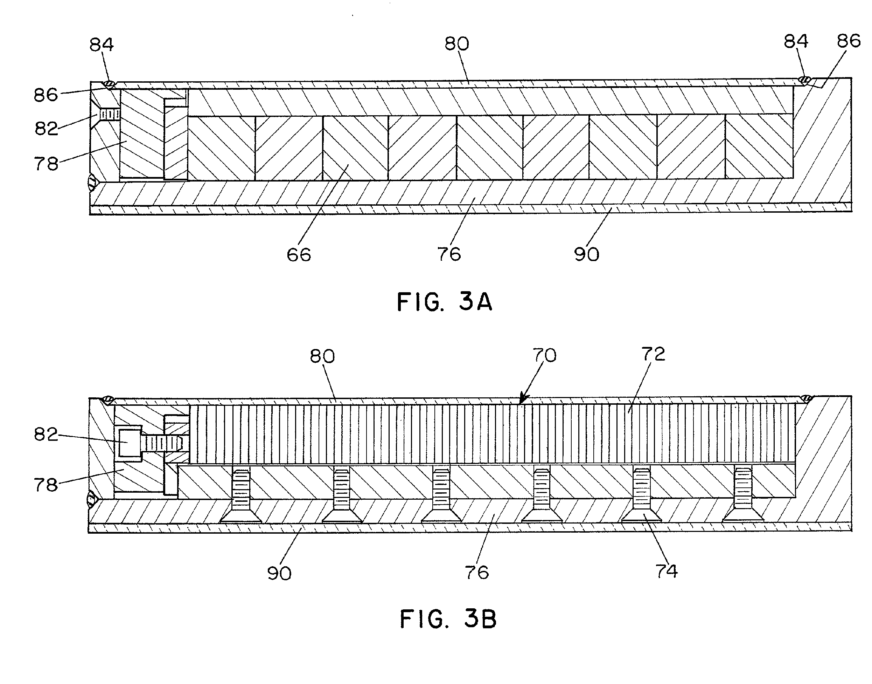

As shown in Fig. 1, the rotor 18 is mounted on a central axial shaft 60 and has an annular outer rotor component 62 supported from the shaft 60 by radial arms 64. As best seen in the schematic cross-sectional view of Fig. 2, the annular rotor component 62 supports a circumferential array of angularly spaced permanent magnets 66 received in openings 68 in the annular rotor component 62, the magnets being oriented to produce magnetic flux through adjacent pole pieces 70 which links the windings 24 in the stator 12 as the rotor 18 turns within the stator. Preferably, as shown in the cross-sectional view of Fig. 3A, each of the slots 68 receives a row of individual magnets 60 aligned in the axial direction of the rotor and, as shown in Fig. 3B, the rotor pole piece 70 consists of an array of circular lamination members 72 and is affixed by screws 74 to an inner cylindrical rotor member 76, the assembly being retained together by end pieces 78 at each end.

In order to provide a water-tight seal, the rotor assembly includes an outer cylindrical can member 80, made of composite material of the same type described above with respect to the stator can member 42, which is retained against the end pieces 78 by screws 82 and is sealed to the end pieces 78 by O-rings 84 received in grooves 86. In addition, another rigid cylindrical composite can member 90 is similarly affixed with appropriate sealing rings to the inner surface of the rotor component 62 to complete the sealing arrangement. As with the stator assembly, the rotor assembly can conveniently be disassembled for repair or maintenance and reassembled without destroying the canning arrangement.

In order to control the flow of liquid through the space 92 in a direction 94 between the outer surface of the rotor 18 and the inner surface of the stator 12, the exposed surface of the outer composite cylindrical can member 80 of the rotor may be shaped with projections arranged to promote or inhibit flow of liquid through the space 92.

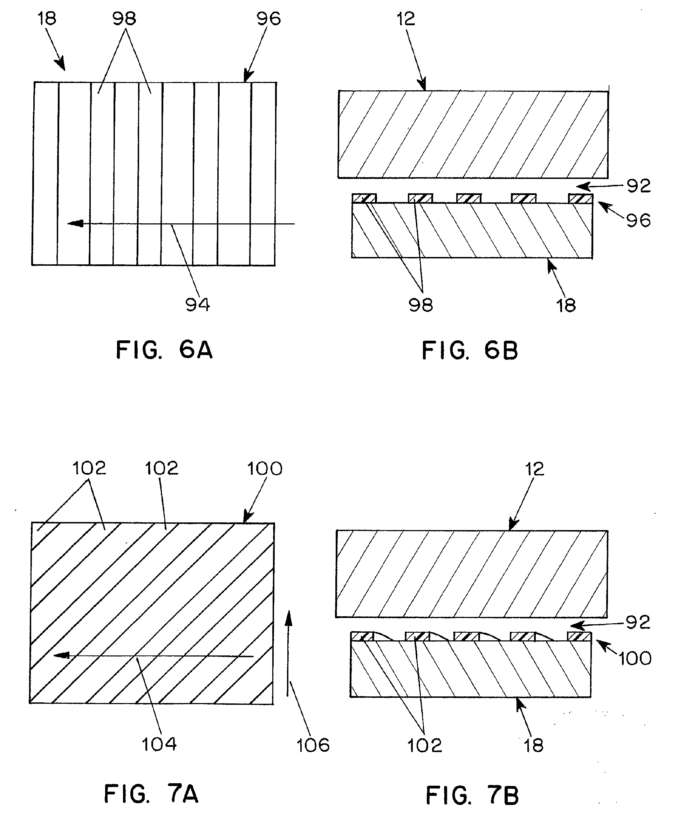

Fig. 6A is a plan view and Fig. 6A is a cross-sectional view of a portion of the outer composite can member 80 of the rotor which is formed with a corrugation pattern consisting of parallel ridges 96 which extend circumferentially around the outer surface of the composite can member 80 so as to inhibit flow of liquid through the gap 92 between the stator and rotor.

Another corrugation pattern 100, shown in Figs. 7A and 7B, includes a series of parallel ridges 102 projecting from the outer surface of the composite rotor can member 80 at an angle to a plane perpendicular to the axis of the rotor, thereby promoting flow of liquid in the direction 104 through the space 92 between the stator and the rotor as the rotor rotates in the direction 106. In this way the flow of water through the space 92 which provides cooling can be manipulated and used as a design parameter. Because the composite rotor and stator canning member are made of fiber reinforced rigid material, those components are resistant to damage and a small but accurate dimension of the space 92 between the rotor and the stator can be maintained during operation.

The composite can member 20 for the motor rotor may be a preformed cylindrical member installed independently between end plates using bolts and clamping plates or, alternatively, it may be wound in place on the outer surface of the motor with a corrugation pattern 96 or 100 subsequently formed in its outer surface.

Although the invention has been described herein with reference to specific embodiments, many modifications and variations therein will readily occur to those skilled in the art. Accordingly, all such variations and modifications are included within the intended scope of the invention.

## Claims

1. An electric motor comprising
a stator;
a rotor supported for rotation within the stator;
a pre-formed cylindrical composite can member removably affixed to one of the stator and rotor; and
at least one sealing ring for sealing the cylindrical can member to the member to which it is affixed.

2. An electric motor according to claim 1 wherein the composite can member is removably affixed by screws.

3. An electric motor according to claim 1 wherein the composite can member has a surface facing a space between the rotor and the stator in which ridges are formed to control flow of liquid through the space.

4. An electric motor according to claim 3 in which the ridges extend circumferentially around the surface of the composite can member facing the space between the rotor and the stator.

5. An electric motor according to claim 3 wherein the composite can member is affixed to the rotor and wherein the ridges extend at an angle to a plane perpendicular to the axis of the rotor.

6. An electric motor according to claim 1 wherein the composite can member comprises a fiber-reinforced polymer material.

7. An electric motor according to claim 6 wherein the fibers in the polymer material are selected from the group consisting of glass, aramid, carbon, polyester and quartz fibers.

8. An electric motor according to claim 6 wherein the fiber-reinforced composite can member is made by a technique selected from the group consisting of dry lay-up resin transfer molding, wet and pre-impregnated, filament winding techniques.

9. An electric motor according to claim 1 wherein the stator comprises a plurality of removably connected components and the composite can member is affixed to the inner surface of the stator by mechanical connectors and wherein the rotor includes an outer can member made of composite material formed by winding the material onto the surface of the rotor.
